# EUROPÄISCHE PATENTSCHRIFT

(11) **EP 1 292 441 B1**
(45) Veröffentlichungstag und Bekanntmachung des Hinweises auf die Patenterteilung: **10.11.2004**
(21) Anmeldenummer: 01936294.6
(22) Anmeldetag: 28.04.2001
(51) Int. Cl.: B29C 45/50

(54) **EINSPRITZAGGREGAT FÜR EINE KUNSTSTOFFSPRITZGIESSMASCHINE**
INJECTION UNIT FOR A PLASTIC INJECTION MOULDING MACHINE
UNITE D'INJECTION DESTINEE A UN DISPOSITIF DE MOULAGE PAR INJECTION DE PLASTIQUE

(30) Priorität: 23.05.2000 DE 10025542; 25.10.2000 DE 10052761
(43) Veröffentlichungstag der Anmeldung: 19.03.2003
(73) Patentinhaber: Bosch Rexroth AG, 97816 Lohr am Main (DE)
(72) Erfinder: DANTLGRABER, Jörg, 97816 Lohr am Main (DE)
(86) Internationale Anmeldenummer: PCT/EP2001/004805
(87) Internationale Veröffentlichungsnummer: WO 2001/089799

(56) Entgegenhaltungen:
- DE-A- 4 344 335
- DE-A- 19 605 747
- PATENT ABSTRACTS OF JAPAN vol. 9, no. 294 (M-431), 20. November 1985 (1985-11-20) -& JP 60 132723 A (FANUC KK), 15. Juli 1985 (1985-07-15)

## Beschreibung

Die Erfindung geht aus von einem Einspritzaggregat für eine Kunststoffspritzgießmaschine, das die Merkmale aus dem Oberbegriff des Patentanspruchs 1 aufweist.

Ein solches Einspritzaggregat ist aus der DE 43 44 335 C2 bekannt. Dort sind zwei gleich große Elektromotoren, die als Hohlwellenmotoren ausgebildet sind, hintereinander in Flucht zur Achse der Schnecke angeordnet. Die Schnecke ist fest mit einer Bewegungsspindel verbunden, die in einer Spindelmutter geführt ist. Das Schraubengelenk zwischen der Bewegungsspindel und der Spindelmutter enthält Kugeln als Rollkörper. Die Spindelmutter bildet die Hohlwelle des einen Elektromotors, der sich, von der Schnecke aus gesehen, vor dem anderen Elektromotor befindet. Die Hohlwelle dieses anderen Elektromotors greift mit einem in der Achse der Bewegungsspindel liegenden Keilzapfen in eine Keilausnehmung der Bewegungsspindel hinein, so daß Keilzapfen und Bewegungsspindel drehfest miteinander verbunden sind, die Bewegungsspindel jedoch axial gegenüber dem Keilzapfen verschoben werden kann.

Im Betrieb kann man im wesentlichen zwei unterschiedliche Bewegungszustände der Schnecke voneinander unterscheiden. Beim Plastifizieren treibt der hintere Elektromotor die Schnecke über die Bewegungsspindel und den Keilzapfen mit einer bestimmten Drehzahl an. Der vordere Elektromotor dreht die Spindelmutter mit einer Drehzahl, die sich von der Drehzahl des hinteren Elektromotors um einen geringen Betrag unterscheidet. Zum Beispiel kann der vordere Elektromotor geringfügig langsamer als der hintere Elektromotor drehen. Durch die Drehzahldifferenz ist die Geschwindigkeit bestimmt, mit der die Schnecke zurückwandert. Dabei wird die Drehzahldifferenz so gesteuert, daß sich im Schneckenvorraum, in den das plastifizierte Kunststoffmaterial gefördert wird, ein gewisser Staudruck aufbaut und erhalten bleibt. Zum Einspritzen des Kunststoffmaterials in die Form muß die Schnecke nach vorne bewegt werden. Dazu dreht der vordere Elektromotor die Spindelmutter weiter, während der hintere Elektromotor derart bestromt wird, daß er die Bewegungsspindel über den Keilzapfen an einer Drehung hindert.

Bei dem bekannten Einspritzaggregat werden für den Antrieb der Schnecke zwei gleich große besondere Elektromotoren verwendet, die relativ teuer sind.

Der Erfindung liegt somit die Zielsetzung zugrunde, ein Einspritzaggregat, das die Merkmale aus dem Oberbegriff des Patentanspruchs 1 aufweist, so weiterzuentwickeln, daß es kostengünstiger hergestellt werden kann.

Das angestrebte Ziel wird dadurch erreicht, daß bei einem Einspritzaggregat mit den Merkmalen aus dem Oberbegriff des Patentanspruchs 1 gemäß dem kennzeichnenden Teil dieses Patentanspruchs das beim Verfahren der Schnecke zum Einspritzen gegen Drehung gehaltene Antriebselement durch eine lösbare mechanische Bremse blockierbar ist. Nach der Erfindung wird somit nicht einer der Elektromotoren verwendet, um beim Einspritzen von Kunststoff in die Form, das unter hohem Druck geschieht, das gegen Drehung zu sichernde Antriebselement zu blockieren, was wegen des hohen Einspritzdrucks gegen ein verhältnismäßig hohes Drehmoment geschehen muß und deshalb auch einen verhältnismäßig großen Elektromotor notwendig macht. Zudem muß das vom Elektromotor aufgebrachte Gegenmoment dem auf das Antriebselement wirkenden Drehmoment entsprechen, was eine aufwendige Regelung für die Winkellage des Antriebselements notwendig macht: Bei einem erfindungsgemäßen Einspritzaggregat dagegen wird das Antriebselement auf einfache Weise durch eine Bremse blockiert. Dafür ist keine besondere Regelung oder Steuerung notwendig. Es ist wird nur ein großer Elektromotor verwendet.

Vorteilhafte Ausgestaltungen eines erfindungsgemäßen Einspritzaggregats kann man den Unteransprüchen entnehmen.

Gemäß Patentanspruch 2 ist die Bremskraft der Bremse veränderbar und die Bremse ist zugleich die Vorrichtung, von der beim Plastifizieren die Drehzahl des einen Antriebselements vorgebbar ist. Als eine solche Vorrichtung kann jedoch gemäß Patentanspruch 3 auch ein zweiter Elektromotor verwendet werden. Dieser kann relativ klein und von allgemein üblicher Bauart sein, so daß das Einspritzaggregat auch unter Berücksichtigung der Kosten für die Bremse noch kostengünstig ist.

Auch bei einem erfindungsgemäßen Einspritzaggregat ist es günstig, den großen Elektromotor, von dem während des Einspritzvorgangs zum Verfahren der Schnecke ein Antriebselement drehend antreibbar ist, mit seiner Achse fluchtend zur Achse der Bewegungsspindel anzuordnen und als Hohlwellenmotor auszubilden, der ohne zwischengeschaltetes Getriebe das Antriebselement unmittelbar antreibt.

Ein zweiter Elektromotor ist gemäß Patentanspruch 5 vorteilhafterweise außerhalb der Achse der Bewegungsspindel angeordnet und mit der Bewegungsspindel bzw. der Spindelmutter über Triebmittel verbunden. Diese sind gemäß Patentanspruch 5 bevorzugt Teil eines Untersetzungsgetriebes.

In der besonders bevorzugten Weiterbildung gemäß Patentanspruch 9 ist von der Vorrichtung die Drehzahl der Spindelmutter vorgebbar. Ist dafür ein zweiter Elektromotor vorgesehen, so dreht er dann also antreibend oder bremsend nur, während das Kunststoffmaterial plastifiziert wird. Und zwar dreht er die Spindelmutter mit einer Drehzahl, die geringfügig von der Drehzahl abweicht, mit der der erste Elektromotor die Bewegungsspindel antreibt. Die Drehzahldifferenz bestimmt die Geschwindigkeit, mit der sich die Schnecke zusammen mit der Bewegungsspindel zurückbewegt. Dabei ist der Aufbau des Einspritzaggregats besonders einfach, wenn gemäß Patentanspruch 10 der große Elektromotor mit der Bewegungsspindel über ein Schubgelenk verbunden ist und die Spindelmutter durch die Bremse gegen Drehung blockierbar ist. Der große Elektromotor treibt die Bewegungsspindel zum Plastifizieren bei gelöster Bremse und bei vom zweiten Elektromotor angetriebener Spindelmutter und zum Einspritzen von Kunststoff bei durch die Bremse blockierter Spindelmutter an. Grundsätzlich ist es denkbar, daß die Bewegungsspindel und die Schnecke fest miteinander verbunden sind, so daß sich die Schnecke auch beim Einspritzen des Kunststoffs dreht. Allerdings erscheint es dann schwierig, die vorgegebene Menge des in die Form einzuspritzenden Kunststoffs genau einzuhalten. Deshalb ist gemäß Patentanspruch 11 vorgesehen, daß eine Drehbewegung der Bewegungsspindel über eine schaltbare Kupplung auf die Schnecke übertragbar ist. Beim Einspritzen ist die Kupplung gelöst, so daß sich trotz rotierender Bewegungsspindel die Schnecke nicht dreht.

Gemäß Patentanspruch 12 ist vom großen Elektromotor die Spindelmutter rotierend antreibbar und durch die Bremse die Bewegungsspindel gegen eine Drehung blockierbar. Bei dieser Ausgestaltung ist es möglich, die Bewegungsspindel und die Schnecke zu einer festen stabilen Einheit zu verbinden, ohne daß die Schnekke während des Einspritzvorgangs gedreht würde. Denn während dieses Einspritzvorgangs kann die Bewegungsspindel und damit die Schnecke durch die Bremse gegen Drehung blockiert werden.

Dabei ist es von Vorteil, wenn gemäß Patentanspruch 13 der große Elektromotor zum Drehen der Schnecke beim Plastifizieren über eine erste schaltbare Kupplung mit der Bewegungsspindel und zum Einspritzen von Kunststoff über eine zweite schaltbare Kupplung mit der Spindelmutter gekoppelt ist. Der große Elektromotor wird also wie bei der Ausgestaltung nach Patentanspruch 13 dazu verwendet, um sowohl während des Plastifizierens die Schnecke zu drehen als auch während des Einspritzens von Kunststoff in die Form die Schnecke nach vorne zu schieben.

Durch eine Ausgestaltung gemäß Patentanspruch 14 wird die Anzahl der notwendigen Bauteile gering gehalten.

Eine vorhandene Kupplung kann eine fremdgeschaltete Kupplung oder eine richtungsgeschaltete Kupplung, ein sogenannter Freilauf, sein. Sind mehrere Kupplungen wie bei der Ausgestaltung gemäß Patentanspruch 13 vorhanden, so ist es auch möglich, eine fremdgeschaltete und eine richtungsgeschaltete Kupplung zu verwenden.

Auch bei der Ausgestaltung gemäß Patentanspruch 17 können die Schnecke und die Bewegungsspindel fest miteinander verbunden sein. Der zweite Elektromotor ist mit der Bewegungsspindel über ein Schubgelenk gekoppelt, wobei in der kinematischen Kette zwischen dem zweiten Elektromotor und dem Schubgelenk ein Antriebselement liegt, das durch die Bremse gegen Drehung blockierbar ist. Zum Plastifizieren von Kunststoff treibt der zweite Elektromotor die Bewegungsspindel bei gelöster Bremse und bei vom ersten Elektromotor angetriebener Spindelmutter an. Zum Einspritzen von Kunststoff dreht der erste Elektromotor die Spindelmutter bei durch die Bremse blockierter Bewegungsspindel, so daß sich diese zusammen mit der Schnecke nach vorne bewegt. Hier ist also ein so starker zweiter Elektromotor zu verwenden, daß dieser das zum Drehen der Schnecke während des Plastifizierens notwendige Drehmoment aufbringen kann.

Mehrere Ausführungsbeispiele eines erfindungsgemäßen Einspritzaggregats kann man den Zeichnungen entnehmen. Anhand der Figuren dieser Zeichnungen wird die Erfindung nun näher erläutert.

Es zeigen
- Figur 1: das erste Ausführungsbeispiel, bei dem ein großer Elektromotor über ein Schubgelenk unmittelbar mit der Bewegungsspindel gekoppelt ist, ein zweiter Elektromotor die Spindelmutter über einen Riemen antreibt und die Spindelmutter mit einer Bremse blockierbar ist,
- Figur 2: ein zweites Ausführungsbeispiel, das hinsichtlich der beiden Elektromotoren, der Bewegungsspindel und der Spindelmutter ähnlich wie dasjenige aus Figur 1 aufgebaut ist, bei dem sich jedoch zwischen Bewegungsspindel und Schnecke eine fremdgeschaltete Kupplung befindet,
- Figur 3: ein drittes Ausführungsbeispiels, das sich von demjenigen nach Figur 2 lediglich dadurch unterscheidet, daß die schaltbare Kupplung richtungsgeschaltet ist,
- Figur 4: ein viertes Ausführungsbeispiel, bei dem der große Elektromotor über eine erste schaltbare Kupplung mit der Bewegungsspindel und über eine zweite schaltbare Kupplung mit der Spindelmutter koppelbar ist und die Bremse auf die Bewegungsspindel wirkt,
- Figur 5: ein fünftes Ausführungsbeispiel, bei dem der große, erste Elektromotor die Spindelmutter und der zweite Elektromotor die Bewegungsspindel drehend antreibt und die Bremse auf die Bewegungsspindel wirkt.
- Figur 6: ein sechstes Ausführungsbeispiel, bei dem wie beim ersten Ausführungsbeispiel ein großer Elektromotor über ein Schubgelenk unmittelbar mit der Bewegungsspindel gekoppelt ist und von einer Bremse die Spindelmutter sowohl zur Staudruckerzeugung bis zu einer gewünschten Drehzahl abbremsbar als auch zum Einspritzen blockierbar ist.

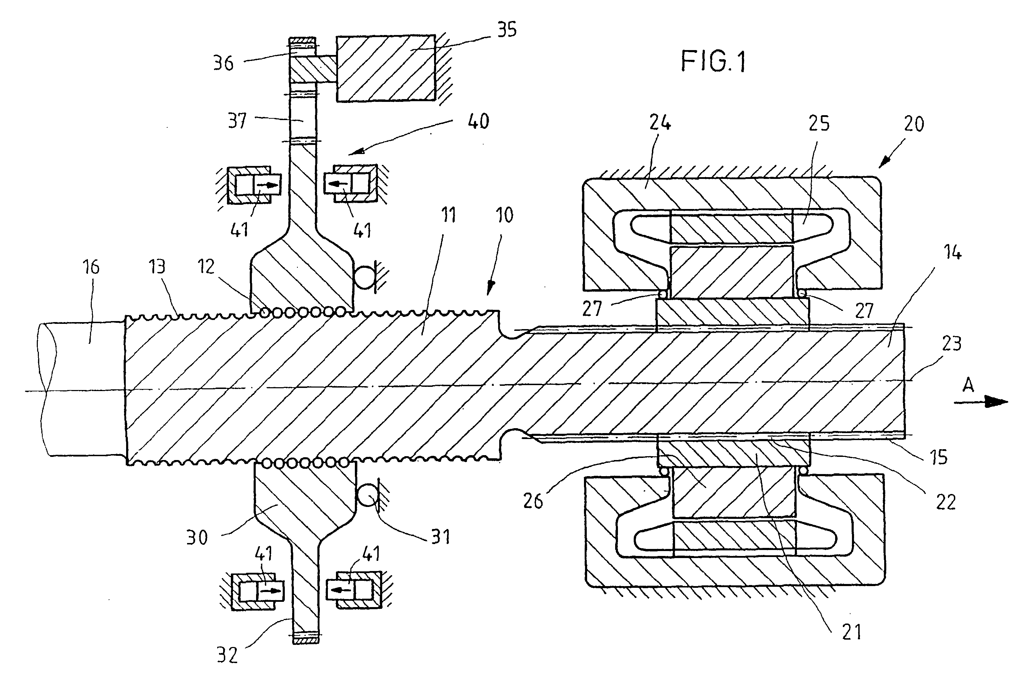

Gemäß Figur 1 hat eine Bewegungsspindel 10 des ausschnittsweise gezeigten Einspritzaggregats einen Abschnitt 11 mit einem zur Führung von Kugeln 12 geeigneten Außengewinde 13 und einen als Keilwelle ausgebildeten Abschnitt 14, der mit axial verlaufenden Keilnuten 15 versehen ist. Am einen Ende des Gewindeabschnitts 11 ist die Bewegungsspindel fest mit einer Schnecke 16 verbunden. Die Bewegungsspindel 10 ist von einem ersten Elektromotor 20 rotierend antreibbar. Dieser ist als Hohlwellenmotor mit einer Hohlwelle 21 ausgebildet, die innen Keile 22 aufweist, die in die Keilnuten 15 der Bewegungsspindel 10 eingreifen. Durch die Keilnuten 15 im Abschnitt 14 der Bewegungsspindel 10 und die Keile 22 in der Hohlwelle 21 ist zwischen dem Elektromotor und der Bewegungsspindel 10 ein Schubgelenk gebildet, das zwischen der Bewegungsspindel 10 und der Hohlwelle 21 eine geradlinige Bewegung in Richtung der Achse 23 der Bewegungsspindel zuläßt. Ein Gehäuse 24 des Elektromotors 20, das einen Stator mit Wicklungen 25 aufnimmt, ist gestellfest angeordnet. Die Hohlwelle 21, die den Rotor 26 trägt, ist über zwei Wälzlager 27, die sowohl Radial- als auch Axialkräfte aufnehmen können, drehbar im Gehäuse 24 gelagert. Der Elektromotor 20 ist ein relativ starker Motor, der große Drehmomente aufbringen kann.

Auf dem Gewindeabschnitt 11 der Bewegungsspindel 10 ist eine als Kugelrollbüchse ausgebildete Spindelmutter 30 geführt, die an ihrer dem Elektromotor 20 zugewandten Seite über ein Axiallager 31 axial abgestützt ist. In ihrer Mitte ist die Spindelmutter 30 mit einem scheibenförmigen Flansch 32 versehen, dessen Außenumfang verzahnt ist. Ein relativ kleiner, zweiter Elektromotor 35 mit einem Antriebsritzel 36 ist im Abstand zur Bewegungspindel 10 so gestellfest angeordnet, daß das Ritzel 36 in der Ebene des Flansches 32 liegt. Ritzel 36 und Flansch 32 sind über einen Zahnriemen 37 miteinander verbunden.

Der Flansch 32 ist als eine Art Bremsscheibe auch Bestandteil einer Bremse 40, die beidseits des Flansches befindliche Bremsbacken 41 aufweist, die senkrecht zur Ebene der Bremsscheibe 32 bewegbar, parallel zu dieser Ebene jedoch gestellfest angeordnet sind. Mithilfe der Bremse 40, die z.B. elektromagnetisch betätigbar ist, ist die Spindelmutter 30 gegen eine Drehung blockierbar.

Im Betrieb wird zum Plastifizieren von Kunststoff die Bewegungsspindel 10 mitsamt der Schnecke 16 von dem ersten Elektromotor 20 angetrieben. Der zweite Elektromotor 35 dreht die Spindelmutter 30 mit einer Drehzahl, die geringfügig größer als die Drehzahl der Bewegungsspindel 10 ist, in die gleiche Richtung, in der auch die Bewegungsspindel dreht. Aufgrund der Drehzahldifferenz wandert die Bewegungsspindel 10 mit der Schnecke 16 in Richtung des in Figur 1 eingezeichneten Pfeiles A zurück. Dabei ist die Drehzahldifferenz und damit die Rücklaufgeschwindigkeit so gewählt, daß sich vor der Schnecke ein bestimmter Staudruck im plastifizierten Kunststoff aufbaut. Die dadurch auf die Spindelmutter 30 ausgeübte Axialkraft wird durch das Lager 31 aufgenommen.

Ist genügend Kunststoff plastifiziert, so fällt die Bremse 40 ein und blockiert die Spindelmutter 30 gegen eine weitere Drehung. Der Elektromotor 35 kann ausgeschaltet werden. Der Elektromotor 20 dreht die Bewegungsspindel 10 mit einer für den Einspritzvorgang erforderlichen Drehzahl in dieselbe Richtung weiter wie vorher, so daß aufgrund des Schraubengelenks zwischen der Bewegungsspindel 10 und der Spindelmutter 30 die Bewegungsspindel 10 und die Schnecke 16 nun entgegen der Richtung des Pfeiles A verschoben werden und Kunststoff in die Form eingespritzt wird.

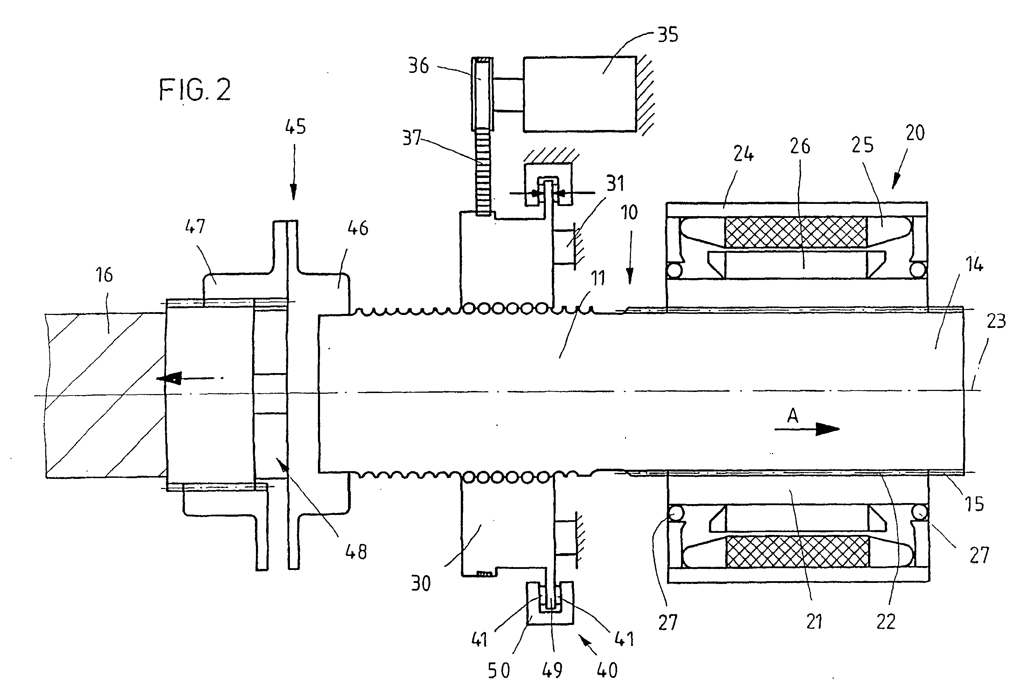

Die Ausführung nach Figur 2 entspricht in ihrem grundsätzlichen Aufbau im Hinblick auf die Bewegungsspindel 10, die Spindelmutter 30 und die beiden Elektromotoren 20 und 35 der Ausführung nach Figur 1, so daß hierauf nicht noch einmal eingegangen werden muß. Nur zwei Ausgestaltungen der Ausführung nach Figur 1 seien näher betrachtet.

Zum einen sind nun die Bewegungsspindel 10 und die Schnecke 16 in Drehrichtung nicht fest miteinander verbunden. Zwischen ihnen ist vielmehr eine fremdgeschaltete Kupplung 45 mit einer bezüglich der Bewegungsspindel 10 festen Kupplungsscheibe 46 und mit einer an der Schnecke 16 geführten und axial beweglichen Kupplungsscheibe 47 angeordnet. Außerdem sind die Schnecke und die Bewegungsspindel über ein Wälzlager 48 axial aneinander abgestützt. In Figur 2 ist oberhalb der Achse 23 die Kupplung 45 in ihrem geschlossenen und unterhalb der Achse 23 in ihrem offenen Zustand gezeichnet.

Anders als bei der Ausführung nach Figur 1 ist nun auf der einen Seite des Riemens 37 an die Spindelmutter 30 eine Bremsscheibe 49 einer Bremse 40 angeformt. Diese greift in einen mit der umlaufenden Innennut versehenen Bremsring 50 ein, an dem beidseits der Bremsscheibe 49 axial bewegbare und an die Bremsscheibe 49 andrückbare Bremsbacken 41 gehalten sind. Der Vorteil der Bremsanordnung nach Figur 2 gegenüber derjenigen nach Figur 1 besteht darin, daß der Zahnriemen 37 ohne Behinderung durch die Bremse ausgetauscht werden kann.

Bei der Ausführung nach Figur 2 wird zum Plastifizieren von Kunststoff die Bewegungsspindel 10 von dem ersten Elektromotor 20 mit einer bestimmten Drehzahl angetrieben. Die Kupplung 45 ist betätigt, so daß sich die Schnecke 16 mit derselben Drehzahl mitdreht. Der Elektromotor 35 treibt die Spindelmutter 30 mit einer leicht höheren Drehzahl an, so daß die Schnecke unter der Wirkung des Staudrucks mit der Bewegungsspindel 10 in Richtung des Pfeiles A zurückwandert. Zum Einspritzen wird die Spindelmutter 30 durch die Bremse 40 blockiert. Außerdem wird die Kupplung 45 gelöst. Der Elektromotor 20 treibt die Bewegungsspindel in derselben Drehrichtung weiter an, so daß Bewegungsspindel 10 und Schnecke 16 entgegen der Richtung des Pfeiles A nach vorne wandern und Kunststoff eingespritzt wird. Die Schnecke 16 dreht sich dabei nicht mit.

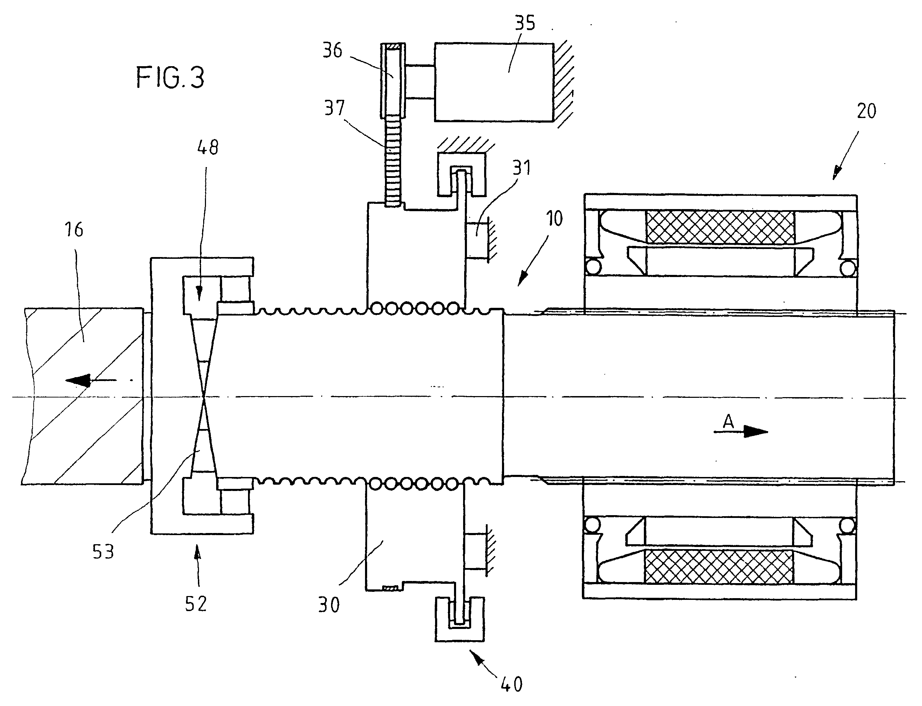

Die Ausführung nach Figur 3 unterscheidet sich von derjenigen nach Figur 2 in konstruktiver Hinsicht nur im Bereich der Koppelung zwischen der Bewegungsspindel 10 und der Schnecke 16. Zwischen diesen beiden Teilen ist nun eine richtungsgeschaltete Kupplung, ein sogenannter Freilauf 52 vorhanden, von dem die Drehung der Bewegungsspindel in die eine Richtung auf die Schnecke 10 übertragen wird, während bei einer Drehung der Bewegungsspindel 10 in die entgegengesetzte Richtung die Schnecke 16 in Ruhe bleibt. Das Axiallager 48 zwischen der Schnecke 16 und der Bewegungsspindel 10 enthält anders als bei der Ausführung nach Figur 2 keine Tonnen, sondern Kegel 53 als Wälzkörper, die sich in einem sich nach außen hin kegelig erweiternden Freiraum zwischen Bewegungsspindel 10 und Schnecke 16 befinden. Dadurch ist eine saubere Rollbewegung der Wälzkörper möglich.

Die andere Art der Kupplung zwischen der Bewegungsspindel 10 und der Schnecke 16 ist kombiniert mit einer anderen Art der Steuerung der beiden Elektromotoren 20 und 35. Angenommen die Gewinde an Bewegungsspindel 10 und Spindelmutter 30 seien Rechtsgewinde, so dreht der Elektromotor 20 die Bewegungsspindel 10 zum Plastifizieren des Kunststoffs mit der gewünschten Drehzahl nach links. Über den in diese Richtung wirksamen Freilauf 52 dreht die Bewegungsspindel 10 die Schnecke 16 mit. Die Spindelmutter 30 wird von dem Elektromotor 35 mit einer Drehzahl angetrieben, die geringfügig kleiner als die Drehzahl der Bewegungsspindel 10 ist. Entsprechend wandern Schnecke 16 und Bewegungsspindel 10 in Richtung des Pfeiles A langsam zurück. Zum Einspritzen wird die Spindelmutter 30 durch die Bremse 40 blockiert. Der Elektromotor 20 dreht nun in die entgegengesetzte Richtung, in der die Bewegungsspindel 10 entgegen der Richtung des Pfeiles A nach vorne wandert und dabei die Schnecke 16 mitnimmt, ohne daß diese eine Drehung vollführt.

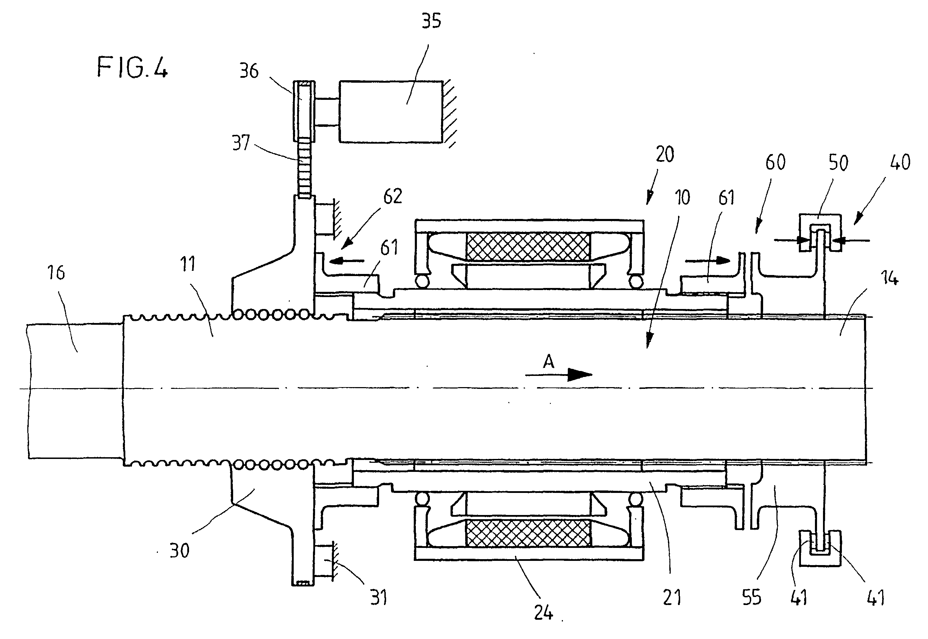

Bei der Ausführung nach Figur 4 ist die einen Gewindeabschnitt 11 und einen Keilabschnitt 14 aufweisende Bewegungsspindel 10 wie bei der Ausführung nach Figur 1 fest mit einer Schnecke 16 verbunden. Auf dem Gewindeabschnitt 11 der Bewegungsspindel 10 ist eine Spindelmutter 30 geführt und über das Axiallager 31 axial abgestützt. Die Spindelmutter ist von dem Elektromotor 35 über eine Abtriebsriemenscheibe 36 und einen Riemen 37 rotierend antreibbar. Der erste Elektromotor 20 der Ausführung nach Figur 4 ist wie bei den Ausführungen nach den Figuren 1 bis 3 im Bereich der Keilwelle 14 der Bewegungsspindel 10 angeordnet. Er ist gegenüber dem Elektromotor 20 aus den Figuren 2 und 3 insofern modifiziert, als nun die Hohlwelle 21 beidseits über das Gehäuse 24 vorsteht. Vor dem der Spindelmutter 30 abgewandten Ende der Hohlwelle 21 ist auf der Keilwelle 14 drehfest, jedoch axial verschieblich eine Scheibe 55 geführt, die in axialer Richtung eine gestellfeste Lage einnimmt und die die Funktion einer Kupplungsscheibe und einer Bremsscheibe hat. Sie ist insofern eine Kupplungsscheibe, als sie über eine erste fremdgeschaltete Kupplung 60 vom Elektromotor 20 über die Hohlwelle 21 antreibbar ist, wobei, wenn die Kupplung geschlossen ist, die Bewegungsspindel 10 drehend mitgenommen wird. Zu der Kupplung 60 gehört noch eine Kupplungsscheibe 61, die mit der Hohlwelle 21 über ein Schubgelenk gekoppelt ist und bezüglich der Hohlwelle 21 und der Scheibe 55 axial bewegt werden kann. Die Betätigung kann z.B. im Wechselspiel zwischen einem pneumatischen Betätigungselement und einer Rückstellfeder erfolgen. Bremsscheibe ist die Scheibe 55 insofern als nun ein Bremsring 50 und Bremsbacken 41 einer Bremse 40 der Scheibe 55 zugeordnet sind. Durch die Bremse 40 kann die Scheibe 55 gegen eine Drehung blockiert werden, wodurch dann auch die Bewegungsspindel gegen Drehung blockiert ist.

Die Hohlwelle 21 ist durch eine zweite fremdbetätigte Kupplung 62 auch mit der Spindelmutter 30 koppelbar. Genauso wie die Kupplung 60 weist auch die Kupplung 62 eine an der Hohlwelle 21 axial geführte Kupplungsscheibe 61 auf, die an die Spindelmutter 30 angedrückt werden kann.

Zum Plastifizieren von Kunststoff ist die Kupplung 60 geschlossen, so daß die Gewindespindel 10 von dem Elektromotor 20 in Drehrichtung z.B. nach links angetrieben wird. Der Elektromotor 35 treibt die Spindelmutter 30 mit einer geringfügig kleineren Drehzahl ebenfalls in Drehrichtung links an, wobei angenommen ist, daß die Gewinde an Bewegungsspindel und Spindelmutter Rechtsgewinde sind. Dann wandert die Spindel 10 langsam in Richtung des Pfeiles A zurück. Zum Einspritzen wird die Kupplung 60 geöffnet und die Kupplung 62 geschlossen. Außerdem wird durch die Bremse 40 die Scheibe 55 und damit die Bewegungsspindel 10 und die Schnecke 16 gegen Drehung blockiert. Der Elektromotor 20 behält seine Drehrichtung bei und treibt nun die Spindelmutter 30 in Drehrichtung links an. Dadurch wandern Schnecke 16 und Bewegungsspindel 10 entgegen der Richtung des Pfeiles A nach vorne.

Es ist auch möglich, daß der Elektromotor 20 während des Plastifizierens die Bewegungsspindel entgegen der Drehrichtung beim Einspritzen nach rechts dreht. Dann muß die Drehzahl der Spindelmutter 30 beim Plastifizieren geringfügig größer sein als die Drehzahl der Bewegungsspindel 10. Unterschiedliche Drehrichtungen des Elektromotors 20 beim Plastifizieren und beim Einspritzen bieten die Möglichkeit, anstelle von fremdbetätigten Kupplungen 60 und 62 Freiläufe einzusetzen, von denen der eine in der einen Drehrichtung des Elektromotors 20 dessen Hohlwelle 21 über die Scheibe 55 und der andere die Hohlwelle 21 in der anderen Drehrichtung über die Spindelmutter 30 mit der Bewegungsspindel 10 koppelt.

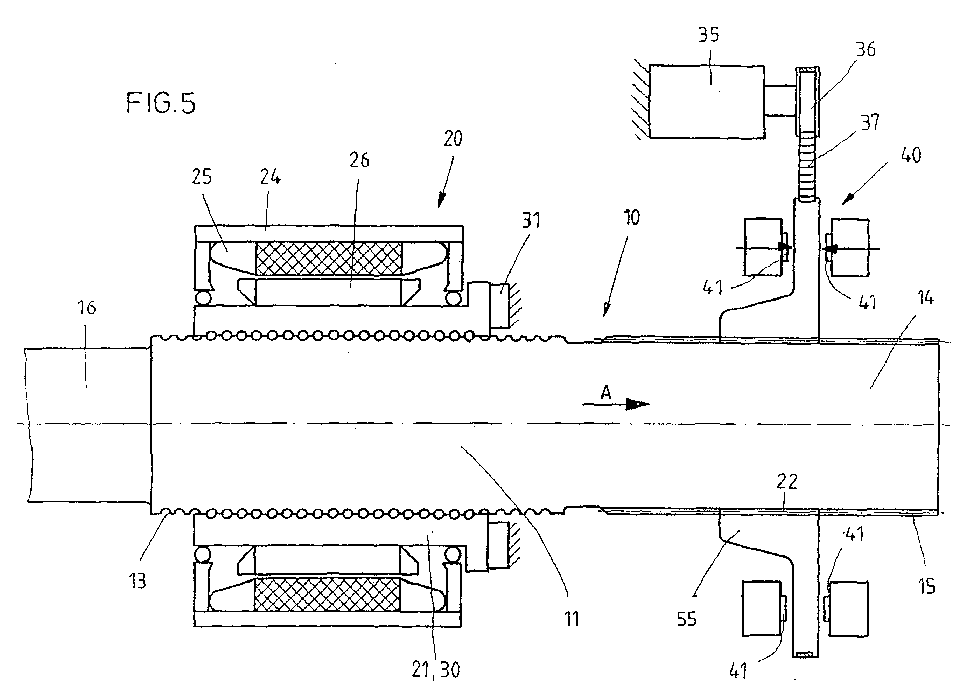

Auch bei der Ausführung nach Figur 5 ist die Schnecke fest mit der Bewegungsspindel 10 verbunden. Diese besitzt wiederum einen mit einem Gewinde versehenen Gewindeabschnitt 11 und einen Abschnitt 14 mit Keilnuten 15. Auf dem Gewindeabschnitt 11 ist eine Spindelmutter 30 geführt, die über das Axiallager 31 abgestützt ist und die nun im Unterschied zu den Ausführungen nach den Figuren 1 bis 4 zugleich die Hohlwelle 21 des ersten Elektromotors 20 ist. Im Hinblick auf das Gehäuse 24, die Wicklungen 25 und den Rotor 26 ist dieser Elektromotor genauso wie bei den Ausführungen nach den Figuren 2 bis 4 ausgebildet. Ähnlich wie bei der Ausführung nach Figur 4 ist im Bereich der Keilwelle 14 auf der Bewegungsspindel 10 eine Antriebsscheibe 55 geführt, die in axialer Richtung eine zum Gestell feste Position einnimmt und mit Keilen 22 in die Keilnuten 15 der Keilwelle 14 eingreift. Dadurch ist zwischen der Bewegungsspindel 10 und der Antriebsscheibe 55 ein Schubgelenk gebildet, das eine axiale Verschiebung der Bewegungsspindel 10 relativ zur Scheibe 55 zuläßt, die beiden Elemente in Drehrichtung jedoch fest miteinander verbindet. Die Scheibe 55 kann vom Elektromotor 35 über dessen Abtriebsritzel 36 und einen Zahnriemen 37 rotierend angetrieben werden. Die Scheibe 55 bildet neben der Antriebsscheibe auch eine Bremsscheibe für eine Bremse 40, deren Bremsbacken 41 wie bei der Ausführung nach Figur 1 beidseits der Ebene, in der sich der Riemen 37 bewegt, angeordnet sind,

Bei der Ausführung nach Figur 5 wird zum Plastifizieren von Kunststoff die Bewegungsspindel 10 und mit ihr die Schnecke 16 von dem Elektromotor 35 mit der erforderlichen Drehzahl angetrieben. Der Elektromotor 20 treibt die Spindelmutter 30 mit einer Drehzahl an, die sich von der Drehzahl der Bewegungsspindel 10 geringfügig unterscheidet, so daß Schnecke 16 und Bewegungsspindel 10 während des Plastifizierens langsam in Richtung des Pfeiles A zurückwandern. Da das zum Plastifizieren notwendige Drehmoment relativ klein ist, genügt nach wie vor ein kleiner Elektromotor 35. Zum Einspritzen von Kunststoff in die Form wird die Scheibe 55 durch die Bremse 40 blockiert, so daß die Bewegungsspindel 10 und die Schnecke 16 sich nicht mehr drehen können. Der Elektromotor 20 treibt nun die Spindelmutter 30 in eine solche Drehrichtung an, daß Schnecke 16 und Bewegungsspindel 10 entgegen der Richtung des Pfeiles A nach vorne verschoben werden.

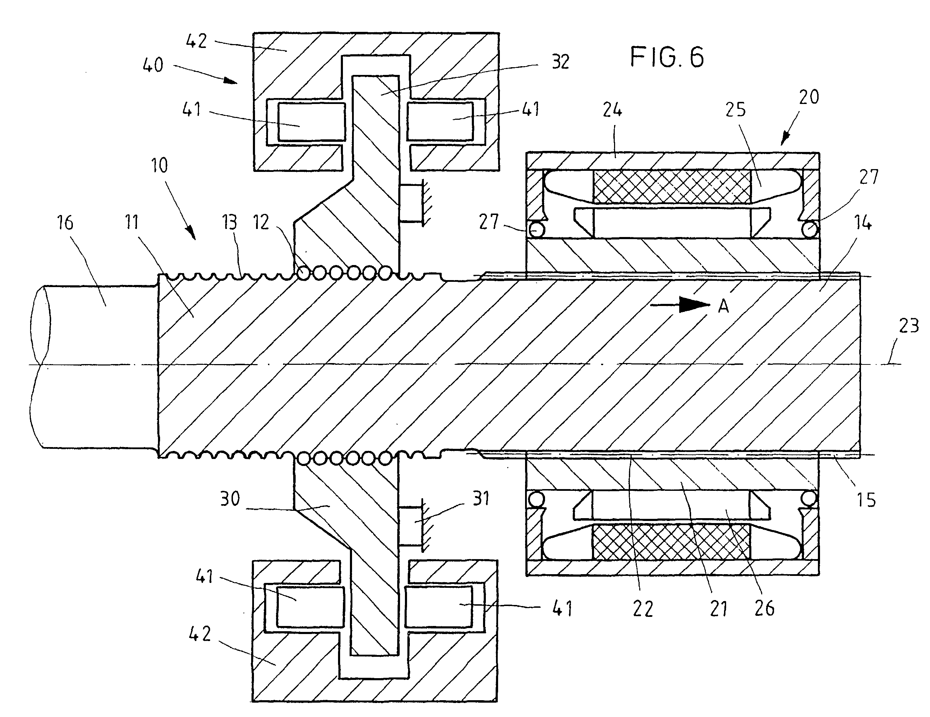

Beim Ausführungsbeispiel nach Figur 6 fehlen im Vergleich zum ersten Ausführungsbeispiel der zweite Elektromotor und die Antriebsmittel zwischen diesem Elektromotor und der Spindelmutter. Ansonsten ist das sechste Ausführungsbeispiel vom konstruktiven Aufbau her gleich dem ersten Ausführungsbeispiel. Dementsprechend hat eine Bewegungsspindel 10 des in Figur 6 ausschnittsweise gezeigten Einspritzaggregats einen Abschnitt 11 mit einem zur Führung von Kugeln 12 geeigneten Außengewinde 13 und einen als Keilwelle ausgebildeten Abschnitt 14, der mit axial verlaufenden Keilnuten 15 versehen ist. Am einen Ende des Gewindeabschnitts 11 ist die Bewegungsspindel fest mit einer Schnecke 16 verbunden. Die Bewegungsspindel 10 ist von einem großen Elektromotor 20 rotierend antreibbar. Dieser ist als Hohlwellenmotor mit einer Hohlwelle 21 ausgebildet, die innen Keile 22 aufweist, die in die Keilnuten 15 der Bewegungsspindel 10 eingreifen. Durch die Keilnuten 15 im Abschnitt 14 der Bewegungsspindel 10 und die Keile 22 in der Hohlwelle 21 ist zwischen dem Elektromotor 20 und der Bewegungsspindel 10 ein Schubgelenk gebildet, das zwischen der Bewegungsspindel 10 und der Hohlwelle 21 eine geradlinige Bewegung in Richtung der Achse 23 der Bewegungsspindel zuläßt. Ein Gehäuse 24 des Elektromotors 20, das einen Stator mit Wicklungen 25 aufnimmt, ist gestellfest angeordnet. Die Hohlwelle 21, die den Rotor 26 trägt, ist über zwei Wälzlager 27, die sowohl Radial- als auch Axialkräfte aufnehmen können, drehbar im Gehäuse 24 gelagert. Der Elektromotor 20 ist, wie oben durch den Begriff "groß" schon angedeutet, ein relativ starker Motor, der große Drehmomente aufbringen kann.

Auf dem Gewindeabschnitt 11 der Bewegungsspindel 10 ist eine als Kugelrollbüchse ausgebildete Spindelmutter 30 geführt, die an ihrer dem Elektromotor 20 zugewandten Seite über ein Axiallager 31 axial abgestützt ist. Außen ist die Spindelmutter 30 mit einem scheibenförmigen Flansch 32 versehen. Entgegen dem ersten Ausführungsbeispiel trägt der Flansch keine Außenverzahnung. Der Flansch 32 ist als eine Art Bremsscheibe auch Bestandteil einer Bremse 40, die mehrere den Flansch übergreifende Bremssättel 42 aufweist, in denen sich beidseits des Flansches Bremsbacken 41 befinden, die senkrecht zur Ebene der Bremsscheibe 32 bewegbar, parallel zu dieser Ebene jedoch gestellfest angeordnet sind. Mithilfe der Bremse 40, die z.B. elektromagnetisch oder hydraulisch betätigbar ist und mit der unterschiedlich starke Bremskräfte ausgeübt werden können, ist die Spindelmutter 30 gezielt auf eine gewünschte, auch veränderliche Drehzahl abbremsbar und auch völlig gegen eine Drehung blockierbar.

Wird im Betrieb die Bewegungsspindel 10 von dem Elektromotor 20 in eine Drehrichtung, zum Beispiel nach rechts, angetrieben, so hängt die Richtung der axialen Bewegung der Bewegungsspindel 10 von der Drehzahl der Spindelmutter 30 relativ zur Drehzahl der Bewegungsspindel 10 ab. Dreht sich die Spindelmutter 30 schneller nach rechts als die Bewegungsspindel 10, so wandert diese in Richtung des Pfeiles A nach hinten. Sind die Drehzahlen von Spindelmutter und Bewegungsspindel gleich, bewegt sich die Bewegungsspindel in axialer Richtung nicht. Ist die Drehzahl der Spindelmutter kleiner als die Drehzahl der Bewegungsspindel, so wandert diese axial nach vorne. Beim Plastifizieren wird Kunststoffmaterial von der sich drehenden Schnecke vor ihr eines Ende gefördert. Dort baut sich ein Staudruck auf, der die Schnecke und die Bewegungsspindel in Richtung des Pfeiles A nach hinten zu verschieben sucht. Eine Verschiebung nach hinten ist nur möglich, wenn sich die Spindelmutter 30 schneller nach rechts dreht als die Bewegungsspindel. Ist die Bremse 40 gelöst, ergibt sich der minimal mögliche Staudruck. Dieser wird von den Reibmomenten in dem Schraubgelenk zwischen der Bewegungsspindel 10 und der Spindelmutter 30, im Axiallager 31 und in der gelösten Bremse 40 bestimmt und ergibt sich durch die Kraft, die notwendig ist, um die Bewegungsspindel 10 bei gelöster Bremse 40 unter Drehen der Spindelmutter 30 in Richtung des Pfeiles A zu verschieben. Durch Ausüben von definierten Bremskräften kann nun das auf die Spindelmutter wirkende Reibmoment erhöht werden, so daß auch die zum Verschieben der Bewegungsspindel notwendige Kraft und damit der Staudruck steigt. Wird die Spindelmutter bis auf die Drehzahl der Bewegungsspindel abgebremst, kommt die Bewegungsspindel axial zum Stillstand und der Staudruck steigt steil an. Durch eine Abbremsung der Drehzahl der Spindelmutter bis unterhalb der Drehzahl der Bewegungsspindel kann die axiale Bewegungsrichtung der Bewegungsspindel sogar umgekehrt und ein noch steilerer Anstieg des Staudrucks erhalten werden. Auf diese Weise läßt sich während des Plastifizierens durch Variation der Bremsmoments ein bestimmtes Staudruckprofil abfahren. Die dabei auf die Spindelmutter 30 ausgeübte Axialkraft wird durch das Lager 31 aufgenommen. Es ist auch denkbar, die Bremse unmittelbar in Abhängigkeit von einem gemessenen Wert des Staudrucks zu betätigen.

Ist genügend Kunststoff plastifiziert, so wird die Spindelmutter 30 von der Bremse 40 gegen eine weitere Drehung blockiert. Der Elektromotor 20 dreht die Bewegungsspindel 10 mit einer für den Einspritzvorgang erforderlichen Drehzahl weiter nach rechts, so daß aufgrund des Schraubengelenks zwischen der Bewegungsspindel 10 und der Spindelmutter 30 die Bewegungsspindel 10 und die Schnecke 16 entgegen der Richtung des Pfeiles A verschoben werden und Kunststoff in die Form eingespritzt wird.

## Patentansprüche

1. Einspritzaggregat für eine Kunststoffspritzgießmaschine
mit einer Schnecke (16),
mit einer Bewegungsspindel (10) als erstes Antriebselement, über die die Schnekke (16) zum Plastifizieren drehend antreibbar und zum Einspritzen in axialer Richtung verfahrbar ist,
mit einer Spindelmutter (30) als zweites Antriebselement, die mit der Bewegungsspindel (10) über ein Bewegungsgewinde (13) gekoppelt ist,
mit einem gestellfest angeordneten, großen Elektromotor (20), von dem, während ein Antriebselement (10, 30) gegen eine Drehung gehalten ist, das andere Antriebselement (30, 10) zum Verfahren der Schnecke (16) beim Einspritzen drehend antreibbar ist,
und mit einer gestellfest angeordneten Vorrichtung (35, 40), von der beim Plastifizieren eine Drehzahl des einen Antriebselements (10, 30) vorgebbar ist, die unterschiedlich zu der Drehzahl ist, mit der gleichzeitig der große Elektromotor (20) das andere Antriebselement (30, 10) antreibt,
**dadurch gekennzeichnet, daß** das beim Verfahren der Schnecke (16) zum Einspritzen gegen Drehung gehaltene Antriebselement (10, 30) durch eine lösbare mechanische Bremse (40) blockierbar ist.

2. Einspritzaggregat nach Anspruch 1, **dadurch gekennzeichnet, daß** die Bremskraft der Bremse (40) veränderbar ist, daß die Bremse die Vorrichtung bildet und daß von dieser beim Plastifizieren die Drehzahl der Spindelmutter (30) vorgebbar ist.

3. Einspritzaggregat nach Anspruch 1, **dadurch gekennzeichnet, daß** die Vorrichtung ein zweiter Elektromotor (35) ist, von dem beim Plastifizieren das eine Antriebselement (10, 30) mit einer Drehzahl antreibbar ist, die unterschiedlich zu der Drehzahl ist, mit der gleichzeitig der große Elektromotor (20) das andere Antriebselement (30, 10) antreibt.

4. Einspritzaggregat nach Anspruch 1, 2 oder 3, **dadurch gekennzeichnet, daß** der große Elektromotor (20) mit seiner Achse fluchtend zur Achse (23) der Bewegungsspindel (10) angeordnet und als Elektromotor mit einer Hohlwelle (21) ausgebildet ist.

5. Einspritzaggregat nach Anspruch 3 oder 4, **dadurch gekennzeichnet, daß** der zweite Elektromotor (35) mit seiner Achse außerhalb der Achse der Bewegungsspindel (10) angeordnet ist und mit dem einen Antriebselement (10, 30) über Triebmittel (36, 37) verbunden ist.

6. Einspritzaggregat nach Anspruch 5, **dadurch gekennzeichnet, daß** die Triebmittel (36, 37) Teil eines Untersetzungsgetriebes sind.

7. Einspritzaggregat nach Anspruch 5 oder 6, **dadurch gekennzeichnet, daß** der zweite Elektromotor (35) ein Abtriebsrad (36) hat, das über einen Riementrieb (37) mit dem einen Antriebselement (10, 30) gekoppelt ist.

8. Einspritzaggregat nach Anspruch 7, **dadurch gekennzeichnet, daß** der Riementrieb einen Keil- oder Zahnriemen (37) aufweist.

9. Einspritzaggregat nach einem vorhergehenden Anspruch, **dadurch gekennzeichnet, daß** von der Vorrichtung (35, 40) die Drehzahl der Spindelmutter (30) vorgebbar ist.

10. Einspritzaggregat nach Anspruch 9, **dadurch gekennzeichnet, daß** der große Elektromotor (20) mit der Bewegungsspindel (10) über ein Schubgelenk (15, 22) verbunden ist, daß die Spindelmutter (30) durch die Bremse (40) gegen Drehung blockierbar ist und daß der große Elektromotor (20) die Bewegungsspindel (10) zum Plastifizieren bei gelöster Bremse (40) und bei vom zweiten Elektromotor (35) angetriebener Spindelmutter (30) und zum Einspritzen von Kunststoff bei durch die Bremse (40) blockierter Spindelmutter (30) antreibt.

11. Einspritzaggregat nach Anspruch 10, **dadurch gekennzeichnet, daß** eine Drehbewegung der Bewegungsspindel (10) über eine schaltbare Kupplung (45, 52) auf die Schnecke (16) übertragbar ist.

12. Einspritzaggregat nach einem der Ansprüche 1 bis 9, **dadurch gekennzeichnet, daß** von dem großen Elektromotor (20), von dem die Schnecke (16) beim Einspritzen verfahrbar ist, die Spindelmutter (30) rotierend antreibbar ist und daß durch die Bremse (40) die Bewegungsspindel (10) gegen eine Drehung blokkierbar ist.

13. Einspritzaggregat nach Anspruch 12, **dadurch gekennzeichnet, daß** eine erste, zum Drehen der Schnecke (16) beim Plastifizieren wirksame schaltbare Kupplung (60) zwischen der Bewegungsspindel (10) und dem großen Elektromotor (20) und eine zweite, zum Verfahren der Schnecke (16) beim Einspritzen wirksame schaltbare Kupplung (62) zwischen der Spindelmutter (30) und dem großen Elektromotor (20) angeordnet ist.

14. Einspritzaggregat nach Anspruch 13, **dadurch gekennzeichnet, daß** die Bewegungsspindel (10) über ein Schubgelenk mit einem dritten Antriebselement (55) gekoppelt ist, das zugleich in der kinematischen Kette zwischen der Bewegungsspindel (10) und dem großen Elektromotor (20) und in der kinematischen Kette zwischen der Bewegungsspindel (10) und der Bremse (40) liegt.

15. Einspritzaggregat nach einem der Ansprüche 11 bis 14, **dadurch gekennzeichnet, daß** eine Kupplung (48, 60, 62) eine fremdgeschaltete Kupplung ist, die zwischen dem Plastifizieren und dem Einspritzen geschaltet wird.

16. Einspritzaggregat nach einem der Ansprüche 11 bis 15, **dadurch gekennzeichnet, daß** eine Kupplung (52) eine richtungsgeschaltete Kupplung ist und daß vom großen Elektromotor (20) zum Plastifizieren ein Antriebselement (10) in die eine Drehrichtung und zum Einspritzen ein Antriebselement (10) in die andere Drehrichtung antreibbar ist.

17. Einspritzaggregat nach Anspruch 12, **dadurch gekennzeichnet, daß** der zweite Elektromotor (35) mit der Bewegungsspindel (10) über ein Schubgelenk verbunden ist, daß ein Antriebselement (55) in der kinematischen Kette zwischen dem zweiten Elektromotor (35) und dem Schubgelenk durch die Bremse (40) gegen Drehung blockierbar ist und daß zum Plastifizieren der zweite Elektromotor (35) die Bewegungsspindel (10) bei gelöster Bremse (40) und bei vom ersten Elektromotor (20) angetriebener Spindelmutter (30) und zum Einspritzen von Kunststoff der erste Elektromotor (20) die Spindelmutter (30) bei durch die Bremse (40) gegen eine Drehung blockierter Bewegungsspindel (10) antreibt.

## Claims

1. An injection unit for a plastic injection moulding machine having a screw (16),
having a motion spindle (10) as first drive element, via which the screw (16) can be rotationally driven for the plasticization and is movable in the axial direction for the injection,
having a spindle nut (30) as second drive element, which is coupled to the motion spindle (10) via a motion screw thread (13),
having a large electric motor (20) which is arranged so as to be fixed to the frame and by which, while one drive element (10, 30) is held against rotation the other drive element (30, 10) can be rotationally driven for moving the screw (16) during the injection,
and having a device (35, 40) which is arranged so as to be fixed to the frame and by which a rotational speed of the one drive element (10, 30) can be preset during the plasticization, this rotational speed being different from the rotational speed at which the large electric motor (20) simultaneously drives the other drive element (30, 10),
**characterized by** the fact that the drive element (10, 30) held against rotation during the moving of the screw (16) for the injection can be locked by a releasable mechanical brake (40).

2. An injection unit according to claim 1, **characterized by** the fact that the braking force of the brake (40) is variable, by the fact that the brake forms the device, and by the fact that the rotational speed of the spindle nut (30) can be preset by the latter during the plasticization.

3. An injection unit according to claim 1, **characterized by** the fact that the device is a second electric motor (35), by which the one drive element (10, 30), during the plasticization, can be driven at a rotational speed which is different from the rotational speed at which the large electric motor (20) simultaneously drives the other drive element (30, 10).

4. An injection unit according to claim 1, 2 or 3, **characterized by** the fact that the large electric motor (20) is arranged with its axis in alignment with the axis (23) of the motion spindle (10) and is formed as an electric motor having a hollow shaft (21).

5. An injection unit according to claim 3 or 4, **characterized by** the fact that the second electric motor (35) is arranged with its axis outside the axis of the motion spindle (10) and is connected to the one drive element (10, 30) via driving means (36, 37).

6. An injection unit according to claim 5, **characterized by** the fact that the driving means (36, 37) are part of a speed reducer.

7. An injection unit according to claim 5 or 6, **characterized by** the fact that the second electric motor (35) has an output pinion (36) which is coupled to the one drive element (10, 30) via a belt drive (37).

8. An injection unit according to claim 7, **characterized by** the fact that the belt drive has a V-belt or toothed belt (37).

9. An injection unit according to any of the preceding claims, **characterized by** the fact that the rotational speed of the spindle nut (30) can be preset by the device (35, 40).

10. An injection unit according to claim 9, **characterized by** the fact that the large electric motor (20) is connected to the motion spindle (10) via a sliding pair (15, 22), by the fact that the spindle nut (30) can be locked against rotation by the brake (40), and by the fact that the large electric motor (20) drives the motion spindle (10) for the plasticization when the brake (40) is released and when the spindle nut (30) is driven by the second electric motor (35) and for the injection of plastic when the spindle nut (30) is locked by the brake (40).

11. An injection unit according to claim 10, **characterized by** the fact that a rotational movement of the motion spindle (10) can be transmitted to the screw (16) via a clutch (45, 52).

12. An injection unit according to any of claims 1 to 9, **characterized by** the fact that the spindle nut (30) can be rotationally driven by the large electric motor (20), by which the screw (16) can be moved during the injection, and by the fact that the motion spindle (10) can be locked against rotation by the brake (40).

13. An injection unit according to claim 12, **characterized by** the fact that a first clutch (60) which is effective for rotating the screw (16) during the plasticization is arranged between the motion spindle (10) and the large electric motor (20), and a second clutch (62) which is effective for moving the screw (16) during the injection is arranged between the spindle nut (30) and the large electric motor (20).

14. An injection unit according to claim 13, **characterized by** the fact that the motion spindle (10) is coupled via a sliding pair to a third drive element (55) which at the same time lies in the kinematic chain between the motion spindle (10) and the large electric motor (20) and in the kinematic chain between the motion spindle (10) and the brake (40).

15. An injection unit according to any of claims 11 to 14, **characterized by** the fact that one clutch (48, 60, 62) is an externally operated clutch which is operated between the plasticization and the injection.

16. An injection unit according to any of claims 11 to 15, **characterized by** the fact that one clutch (52) is a one-way clutch, and by the fact that, by the large electric motor (20), one drive element (10) can be driven in the one direction of rotation for the plasticization and in the other direction of rotation for the injection.

17. An injection unit according to claim 12, **characterized by** the fact that the second electric motor (35) is connected to the motion spindle (10) via a sliding pair, by the fact that a drive element (55) in the kinematic chain between the second electric motor (35) and the sliding pair can be locked against rotation by the brake (40), and by the fact that, for the plasticization, the second electric motor (35) drives the motion spindle (10) when the brake (40) is released and when the spindle nut (30) is driven by the first electric motor (20), and, for the injection of plastic, the first electric motor (20) drives the spindle nut (30) when the motion spindle (10) is locked against rotation by the brake (40).

## Revendications

1. Une unité d'injection pour une machine à mouler le plastique par injection dotée d'une vis (16),
dotée, pour premier élément d'entraînement, d'une broche (10) de mouvement, qui permet d'entraîner la vis (16) en rotation pour la plastification et de la faire coulisser dans la direction axiale pour l'injection,
dotée, pour deuxième élément d'entraînement, d'un écrou (30) de broche, qui est accouplé avec la broche (10) de mouvement au travers d'un filetage (13) de mouvement,
dotée d'un gros moteur (20) électrique, qui est disposé de façon fixe sur le châssis et qui lors de l'injection, cependant qu'un élément (10, 30) d'entraînement est maintenu contre toute rotation, permet d'entraîner en rotation l'autre élément (10, 30) d'entraînement pour faire coulisser la vis (16),
et dotée d'un dispositif (35, 40), qui est disposé de façon fixe sur le châssis et qui lors de la plastification permet de donner à l'un des éléments (10, 30) d'entraînement une vitesse de rotation distincte de la vitesse de rotation, avec laquelle le gros moteur (20) électrique simultanément entraîne l'autre élément (10, 30) d'entraînement,
**caractérisée en ce que** l'élément (10, 30) d'entraînement, qui est maintenu contre toute rotation pendant le coulissement de la vis (16) pour l'injection, peut être bloqué par l'effet d'un frein (40) mécanique pouvant être relâché.

2. Une unité d'injection selon la revendication n° 1, **caractérisée en ce que** la force de freinage développée par le frein (40) peut varier, que le frein constitue le dispositif et que, lors de la plastification, celui-ci peut déterminer la vitesse de rotation de l'écrou (30) de broche.

3. Une unité d'injection selon la revendication n° 1, **caractérisée en ce que** le dispositif est un deuxième moteur (35) électrique, qui pendant la plastification peut entraîner l'un des éléments (10, 30) d'entraînement avec une vitesse de rotation distincte de la vitesse de rotation, avec laquelle le gros moteur (20) électrique simultanément entraîne l'autre élément (10, 30) d'entraînement.

4. Une unité d'injection selon la revendication n° 1, n° 2 ou n° 3, **caractérisée en ce que** le gros moteur (20) électrique est disposé avec son axe aligné sur l'axe (23) de la broche (10) de mouvement et est conçu sous forme de moteur électrique à arbre (21) creux.

5. Une unité d'injection selon la revendication n° 3 ou n° 4, **caractérisée en ce que** le deuxième moteur (35) électrique est disposé avec son axe en dehors de l'axe de la broche (10) de mouvement et est relié à l'un des éléments (10, 30) d'entraînement par un moyen (36, 37) d'entraînement.

6. Une unité d'injection selon la revendication n° 5, **caractérisée en ce que** le moyen (36, 37) d'entraînement fait partie d'un démultiplicateur.

7. Une unité d'injection selon la revendication n° 5 ou n° 6, **caractérisée en ce que** le deuxième moteur (35) électrique présente une roue (36) de sortie, qui est accouplée avec l'un des éléments (10, 30) d'entraînement au travers d'une commande (37) à courroie.

8. Une unité d'injection selon la revendication n° 7, **caractérisée en ce que** la commande à courroie présente une courroie (37) trapézoïdale ou dentée.

9. Une unité d'injection selon une revendication précédente, **caractérisée en ce que** le dispositif (35, 40) peut donner la vitesse de rotation de l'écrou (30) de broche.

10. Une unité d'injection selon la revendication n° 9, **caractérisée en ce que** le gros moteur (20) électrique est relié à la broche (10) de mouvement par un joint (15, 22) à glissière, que l'écrou (30) de broche peut être bloqué contre toute rotation par le frein (40) et que le gros moteur (20) électrique entraîne la broche (10) de mouvement pour la plastification, cependant que le frein (40) est relâché et que le deuxième moteur (35) électrique entraîne l'écrou (30) de broche, et pour l'injection de matière plastique, cependant que le frein (40) bloque l'écrou (30) de broche.

11. Une unité d'injection selon la revendication n° 10, **caractérisée en ce qu'**un mouvement de rotation de la broche (10) de mouvement peut être transmis à la vis (16) par un dispositif d'accouplement (45, 52) débrayable.

12. Une unité d'injection selon une des revendications n° 1 à n° 9, **caractérisée en ce que** l'écrou (30) de broche peut être entraîné en rotation par le gros moteur (20) électrique, qui peut faire coulisser la vis (16) pendant l'injection, et que le frein (40) permet de bloquer la broche (10) de mouvement contre toute rotation.

13. Une unité d'injection selon la revendication n° 12, **caractérisée en ce qu'**un premier dispositif d'accouplement (60) débrayable, qui agit pour la rotation de la vis (16) lors de la plastification, est disposé entre la broche (10) de mouvement et le gros moteur (20) électrique, et un second dispositif d'accouplement (62) débrayable, qui agit pour le coulissement de la vis (16) lors de l'injection, est disposé entre l'écrou (30) de broche et le gros moteur (20) électrique.

14. Une unité d'injection selon la revendication n° 13, **caractérisée en ce que** la broche (10) de mouvement est accouplée par un joint à glissière à un troisième élément (55) d'entraînement, qui est disposé simultanément dans la chaîne cinématique entre la broche (10) de mouvement et le gros moteur (20) électrique et dans la chaîne cinématique entre la broche (10) de mouvement et le frein (40).

15. Une unité d'injection selon une des revendications n° 11 à n° 14, **caractérisée en ce qu'**un dispositif d'accouplement (48, 60, 62) est un dispositif d'accouplement à commande externe, qui est commuté entre la plastification et l'injection.

16. Une unité d'injection selon une des revendications n° 11 à n° 15, **caractérisée en ce qu'**un dispositif d'accouplement (52) est un dispositif d'accouplement à commutation de sens et que le gros moteur (20) électrique peut entraîner un élément (10) d'entraînement dans un sens de rotation pour la plastification et un élément (10) d'entraînement dans l'autre sens de rotation pour l'injection.

17. Une unité d'injection selon la revendication n° 12, **caractérisée en ce que** le deuxième moteur (35) électrique est relié à la broche (10) de mouvement par un joint à glissière, qu'un élément (55) d'entraînement dans la chaîne cinématique entre le deuxième moteur (35) électrique et le joint à glissière peut être bloqué contre toute rotation par le frein (40) et que, pour la plastification, le deuxième moteur (35) électrique entraîne la broche (10) de mouvement, le frein (40) étant relâché et le premier moteur (20) électrique entraînant l'écrou (30) de broche, et, pour l'injection de matière plastique, le premier moteur (20) électrique entraîne l'écrou (30) de broche, le frein (40) bloquant la broche (10) de mouvement contre toute rotation.
